(19) Europäisches Patentamt

European Patent Office

Office européen des brevets

(11) **EP 1 737 176 A1**

(12) **EUROPEAN PATENT APPLICATION**

(43) Date of publication:
**27.12.2006 Bulletin 2006/52**

(51) Int Cl.:
***H04L 27/26*** (2006.01)

(21) Application number: **05013276.0**

(22) Date of filing: **20.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **NTT DoCoMo, Inc.**
**Tokyo (JP)**

(72) Inventors:
• **Tejera, Pedro**
**80798 München (DE)**
• **Utschick, Wolfgang, Prof. Dr.**
**85051 Ingolstadt (DE)**

• **Nossek, Josef A., Prof. Dr.**
**82393 Iffeldorf (DE)**
• **Bauch, Gerhard, Dr.**
**80799 München (DE)**

(74) Representative: **Zinkler, Franz et al**
**Patentanwälte Schoppe, Zimmermann,**
**Stöckeler & Zinkler,**
**Postfach 246**
**82043 Pullach bei München (DE)**

Remarks:
Amended claims in accordance with Rule 86 (2) EPC.

(54) **Signalling for allocation of a communication link in a MIMO system**

(57) An apparatus for signaling an allocation of a communication link between a transmitter (100) and a first receiver (102) to a first subchannel ($H_1$) of a communication channel and for signaling an allocation of a second communication link between the transmitter (100) and a second receiver (104) to a second subchannel ($H_2$) of the communication channel, the first and second subchannels ($H_1$, $H_2$) being different from each other, comprises a subchannel allocation signaler (106) being configured to transmit a first user identifier (ui1) over the first subchannel ($H_1$) and to transmit a second user identifier (ui2) over the second subchannel ($H_2$), wherein the first and second user identifiers (ui1, ui2) are different from each other and wherein the first user identifier (ui1) is assigned to the first receiver (102) and the second user identifier (ui2) is assigned to the second receiver (104).

FIG. 1A

**Description**

In a point to multipoint setting, such as the downlink of a mobile communication system, a number of receivers of users receive information, which may be independent or common from a unique transmitter. Considering transmission of independent information streams to each user, the transmitter will generally first partition the available resources (as, for example, time, frequency, code, space) disjointly among users. Thus, every user will receive information over different time slots, different codes, different carriers or different spatial dimensions. In order to make detection possible, each user should know the outcome of this resource allocation, i.e. each user should know the physical dimensions over which signals are transmitted that are intended for that user. As a consequence, some signaling is required that conveys this knowledge from the transmitter to each of the multiple receivers.

This problem is handled differently in different systems. For instance, in GSM the base station assigns a different time slot to each user according to a TDMA-scheme (TDMA = time division multiple access). After a mobile station applies for a time slot over a random access channel, the base station broadcasts a time slot identifier in the socalled access granted channel, as for example shown in the German source B. Walke, "Mobilfunknetze und ihre Protokolle 1", Teubner, 2001. This identifier indicates the time slot over which the mobile station should expect its information flow. In each time slot, a sequence of pilots is sent that serves for channel estimation purposes. Similarly, in HIPERLAN/2 the request for resources of a mobile terminal over a random access channel is replied by the access point with information about the assigned time slot over a broadcast channel. In each allocated time slot some pilots are transmitted that allow the mobile terminal to estimate the channel, as for example shown in the German source B. Walke, "Mobilfunknetze und ihr Protokolle 2", Teubner, 2001. Contrary to GSM, the duration of the time slots as well as the transmission rate is not predefined, therefore, information about the parameters is transmitted at the beginning of each time slot. In UMTS, users are assigned disjoint channels, which are characterized by the time slot, frequency carrier and code that are used for transmission. As in GSM and HIPERLAN/2 the transmitter informs the users about the resource allocation over a common signaling channel as shown in the standard 3GPP TR25.331. Radio resource control (RRC): Protocol specification. V6.4.0 Release 6, 2004. Part of the resources allocated to the user are utilized to set up a signaling channel over which pilots for channel estimation and transmission parameters are sent as shown in B. Walke, "Mobilfunknetze und ihre Protokolle 1", Teubner, 2001.

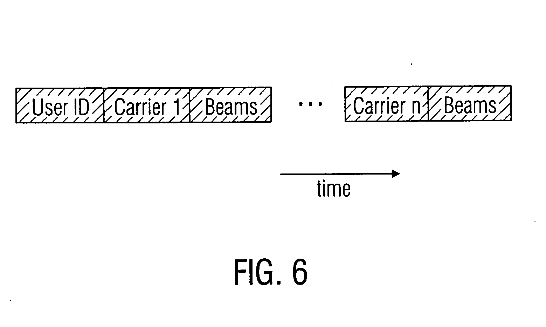

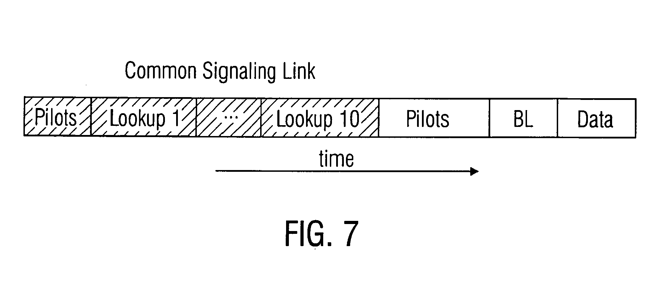

Although different in the details, signaling schemes of the state-of-the-art wireless systems show a regular two-step pattern. First, information about the allocation of resources is broadcast over a common signaling link. Then, over the allocated channels, pilots and transmission parameters are sent to assist detection of the signals. A frame structure of conventional transmission schemes can be seen in Fig. 6 and Fig. 7.

To be more specific, herein a signaling concept for a multicarrier system with multiple transmit antennas and possibly multiple receive antennas at each of the receivers is described. For subcarrier $n \in \{1,...,N\}$ the relationship between the vector of transmitted signals $x(n) \in C^t$ and the vector $y_k(n) \in C^{r_k}$ of signals received by user $k \in \{1,..., K\}$ can be expressed as

$$y_k(n) = \mathbf{H}_k(n)\mathbf{x}(n) + \mathbf{n}_k(n), \qquad\qquad (1.1)$$

where $\mathbf{H}_k(n) \in C^{r_k \times t}$ is the channel matrix seen by user k at subcarrier n, $\mathbf{n}_k(n) \in C^{r_k}$ a realization of a zero-mean circularly symmetric complex Gaussian distributed random noise $\mathbf{n}_k(n)$, t is the number of transmit elements and $r_k$ is the number of receive elements of user k.

The transmit signal x(n) is given by

$$x(n) = \sum_{c=1}^{C} v_{\Pi_n(c)} p_{\Pi_n(c)}^{1/2} s_{\Pi_n(c)} . \qquad\qquad (1.2)$$

Thereby, C is the number of spatial dimensions allocated on subcarrier n, which is smaller than or equal to the number of transmit antennas t. Function $\Pi_n(\cdot)$ maps each spatial dimension in subcarrier n to a subchannel label pair (k,l), where k is the user the dimension has been assigned to and 1 identifies a specific subchannel among all subchannels assigned to that user in that subcarrier. Each subchannel is univocally characterized by a unit-norm transmit weighting

vector $v_{\Pi_n(c)} \in C^t$ and a unit-norm receive weighting vector $u_{\pi_n(c)}^H \in C^{1 \times r_{u(c)}}$ that filters the receive signal $y_{u_n(c)}$, being $u_n(c)$ the user to which dimension c in subcarrier n is assigned. The power allocated for transmission in subchannel $\Pi_n(c)$ is $p_{n_n}(c)$ and the transmitted signal $s_{n_n}$. In P. Tejera, W. Utschick, G. Bauch, and J.A. Nossek, "A Novel Decomposition Telchnique for International Multiuser MIMO", published in ITG/IEEE Workshop on smart Antennas, Duisburg, Apr. 2005 or also the international patent application PCT/EP2004/012571 a successive algorithm is reported that successively computes transmit and receive weighting vectors so that on a particular subchannel $\Pi_n(c)$ no interference is caused by subchannels $\pi_n(c'> c)$. Interference caused by subchannels $\pi_n(c'< c)$ can be neutralized by coding signals in the order prescribed by index c and taking into account the knowledge of interference caused by previously encoded signals when coding signal $s_{\pi_n(c)}$.

In a transmission scheme such as the one described here, each user receives a portion of the available space and frequency dimensions, which constitute the resources of the system. This distribution of resources takes place at the transmitter and has to be revealed to the users. Sticking to current signaling methods first information about the resource allocation could be broadcast and then on each subchannel pilots and transmission parameters might be sent. However, there are some major features of the system under consideration that make a direct application of this standard signaling approach highly inefficient.

One special drawback of such a conventional system can be seen in that the expected number of subcarriers (for example N = 1024) and transmit antennas (for example t≥4) yields a system with many dimensions. Accordingly, a large amount of information should be transmitted in the broadcast channel to reveal to the users the outcome of the resource allocation. Furthermore, contrary to standard systems in which time, frequency or code dimensions can be unambiguously referenced by some kind of numerical identifier, spatial dimensions in the system require the broadcast of corresponding receive weighting vectors $u_n(c)$, that together with the transmit weighting vectors $v_n(c)$ and the subcarriers n characterize the allocated space-frequency subchannels. This increases the amount of required signaling as compared with current conventional systems. Additionally, contrary to standard systems, allocation of resources strongly depends on the channel condition and as a result it changes with every significant change in the radio channel. This calls for a very high bandwidth in the signaling broadcast channel in order to keep receivers up to date.

Additionally, a slight improvement of data transmission can be seen in a Tomlinson-Harashima decoding as, for example, shown in G. Ginis and J. Cioffi, "A Multi-user Precoding Scheme achieving Crosstalk Cancellation with Application to DSL Systems" published in Asilomar Conference on Signals, Systems and Computers, pages 1627-1631, Oct. 2000 in order to provide a possibility to rule out interference which is inserted into the data during transmission over the communication channel. This can slightly improve the data transmission and thus slightly lower the necessary bandwidth for the signaling broadcast channel.

Accordingly, it is an object of the present invention to provide an improved possibility for an exchange of information concerning the subcarrier allocation in a communication link between transmitter and one or more receivers. This improvement shall especially concern a lower required bandwidth, respectively a lower data overhead for signaling an allocation of subcarriers for transmission of data between the transmitter and a receiver.

This object is achieved by an apparatus for signaling according to claim 1, an apparatus for determining according to claim 8, a method for signaling according to claim 7 and a method for determining according to claim 16.

The present invention provides an apparatus for signaling an allocation of a first communication link between a transmitter and a first receiver to a first subchannel of a communication channel and for signaling an allocation of a second communication link between the transmitter and a second receiver to a second subchannel of a communication channel, the first and second subchannels being different from each other, the apparatus comprising:

a subchannel allocation signaler being configured to transmit a first user identifier over the first subchannel and to transmit a second user identifier over the second subchannel, the first and second user identifiers being different from each other, wherein the first user identifier is assigned to the first receiver and the second user identifier is assigned to the second receiver.

Furthermore, the present invention provides a method for signaling an allocation of a first communication link between a transmitter and a first receiver to a first subchannel of a communication channel and for signaling an allocation of a second communication link between the transmitter and a second receiver to a second subchannel of a communication channel, the first and second subchannels being different from each other, the method comprising the following step:

subchannel allocation signaling being performed by transmitting a first user identifier over the first subchannel and transmitting a second user identifier over the second subchannel, the first and second user identifiers being different from each other, wherein the first user identifier is assigned to the first receiver and the second user identifier is assigned to the second receiver.

Additionally, the present invention provides an apparatus for determining an allocation of a communication link between a transmitter and a receiver to a subchannel of a communication channel on the basis of a predefined user identifier being assigned to the receiver, the apparatus comprising:

an estimator being configured to estimate a user identifier received over the subchannel in order to obtain an estimated user identifier; and

a detector for accepting the allocation of the communication link between the transmitter and the receiver to the subchannel, if the estimated user identifier is in a predefined relation with the predefined user identifier and for rejecting the allocation of the communication link between the transmitter and the receiver to the subchannel if the estimated user identifier is not in the predefined relation with the predefined user identifier.

Finally, the present invention provides a method for determining an allocation of a communication link between a transmitter and a receiver to a subchannel of a communication channel on the basis of a predefined user identifier being assigned to the receiver, the method comprising the steps of:

estimating a user identifier received over the subchannel in order to obtain an estimated user identifier; and

accepting the allocation of the communication link between the transmitter and the receiver to the subchannel, if the estimated user identifier is in a predefined relation with the predefined user identifier and rejecting the allocation of the communication link between the transmitter and the receiver to the subchannel if the estimated user identifier is not in the predefined relation with the predefined user identifier.

The present invention is based on the finding that an improvement in data transmission, especially an improvement in a signaling of an allocation of subcarriers or subchannels to a special communication link between a transmitter and a receiver, can be achieved in that the conventional approach using a lookup table is omitted. Rather, an allocation of subchannels to a communication link between a transmitter and a receiver can be configured such that the receiver has knowledge about a special user identifier which is assigned to said receiver. Furthermore, the transmitter also has knowledge about a user identifier which is assigned to said receiver. If a transmitter now wants to establish a communication link between the transmitter and said receiver using the one special subchannel, the transmitter sends this predefined user identifier over the subchannel which is intended to be used for a transmission of data from the transmitter to said receiver. In return, the receiver listens to all the subchannels and compares the data, especially the user identifiers which are transmitted over the subchannels, with the predefined user identifier which is saved in the receiver and which is allocated to said receiver. If now the receiver received and/or estimates a user identifier which is transmitted over a subchannel, compares the received user identifier with the saved predefined user identifier and determines that the received user identifier for said subchannel is in a predefined relation with the predefined user identifier for the receiver, for example if the received user identifier is equal to the predefined saved user identifier, the receiver knows that the respective subchannel is allocated for a communication link between the transmitter and said receiver. On the contrary, if the receiver detects that a user identifier received over a subchannel is not in said predefined relation with the predefined user identifier, the receiver knows that the subchannel is not allocated to said receiver for a communication link between the transmitter and said receiver. Thus, it is possible to inform the receiver on which subchannel it can expect data which is intended to be received by said receiver.

The inventive approach provides the advantage that the transmission of a complete lookup table is not necessary as the allocation of subchannels to the receivers is signaled directly on each subchannel. Therefore, the inventive approach provides the advantage of an improved data transmission as no large overhead (including a lookup table of an assignment of subcarriers or subchannels to receivers) is necessary. Therefore, the bandwidth or transmission capacity, which formerly was used to transmit said lookup table, can now be used for transmission of payload data, thus increasing the available payload transmission rate of such a communication system. The advantages of the inventive approach become especially clear in a communication system having a large amount of subcarriers and/or which uses a communication channel which rapidly changes, like, for example, a (mobile) radio channel or a MIMO-channel (MIMO = multiple-input-multiple-output).

Preferred embodiments of the present invention are described with respect to the following figures in which

Fig. 1A    shows a block diagram of an embodiment of the inventive apparatus for signaling;

Fig. 1B    shows an embodiment of the inventive apparatus for determining;

Fig. 2     shows a schematic diagram of a MIMO-system as used for the description of the inventive approach;

Fig. 3     shows a schematic diagram of one communication link between a transmitter and a receiver;

Fig. 4     shows a flow diagram of an embodiment of one of the inventive methods;

Fig. 5     shows a schematic diagram of a possible frame structure resulting when an embodiment of the present invention is used;

Fig. 6     shows a schematic diagram of a probable frame structure when a conventional signaling technique is used; and

Fig. 7     shows a schematic diagram of another probable resulting frame structure when the conventional approach for signaling is used.

In the further description, equal or similar elements are denoted by equal or similar reference numerals, wherein a repeated description of these reference numerals is omitted.

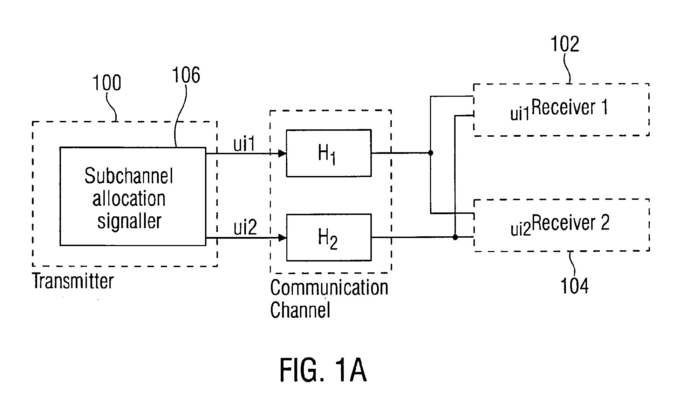

Fig. 1A shows a block diagram of an embodiment of the inventive apparatus for signaling an allocation of a first communication link between a transmitter 100 and a first receiver 102 and a second communication link between the transmitter 100 and a second receiver 104. The transmitter 100 comprises a subchannel allocation signaler 106 which is configured to transmit a first user identifier ui1 over the first subchannel $H_1$ and to transmit a second user identifier ui2 over the second subchannel $H_2$. The first subchannel $H_1$ and the second subchannel $H_2$ are subchannels of a communication channel, whereas the first and second subchannels are different from each other. Furthermore, in such a system design the first receiver 102 can be configured to listen to both, the first subchannel $H_1$ and the second subchannel $H_2$, whereas the second receiver 104 is also configured to listen to both, the first subchannel $H_1$ and the second subchannel $H_2$. In order to determine the subchannel over which the receivers can expect data from the transmitter 100, each of the receivers 102 and 104 has knowledge about a user identifier which is assigned to the receiver itself. In other words, the first receiver 102 has knowledge about the first user identifier ui1, whereas the second receiver 104 has knowledge about the second user identifier ui2. As also the transmitter 100, especially the subchannel location signaler 106, has knowledge which user identifiers of the first and the second user identifier are assigned to the respective receivers, a transmission of the first user identifier ui1 over the first subchannel $H_1$ clearly informs the first receiver 102 that the data sent over this first subchannel $H_1$ is supposed to be received by the first receiver 102. Analogously, if receiver two 104 receives a second user identifier ui2 over the second subchannel $H_2$, the second receiver knows that the data transmitted over the second subchannel $H_2$ is intended to be received by the second receiver 104. Additionally, the first receiver 102 knows that data transmitted over the second subchannel $H_2$ is not intended to be received on the first receiver 102. Again, analogously, the second receiver 104 knows that data transmitted over the first subchannel $H_1$ was not intended to be received by the second receiver 104. This possibility of distinguishing between the acceptance or rejection of data transmitted over the subchannels to the receiver is based on an identification of the user identifiers transmitted over each of the subchannels (for example in a setup-period for establishing a communication link). Thus, such a signaling of an allocation of subchannels to different receivers provides the advantage that the transmission of a lookup table (in which an assignment of subchannels to receivers is included) can be avoided. Thus, a signaling of an allocation of subchannels to receivers can be realized in a more efficient and faster way as in the state-of-the-art, thus resulting in an increased data transmission rate for the user to transmit payload data.

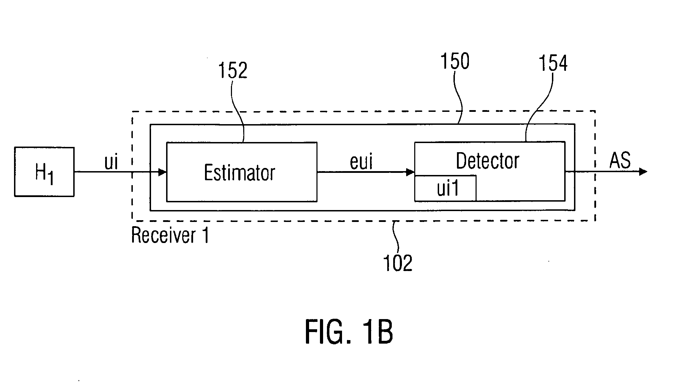

Fig. 1B shows a block diagram of an embodiment of the inventive apparatus 150 for determining being located in a receiver 102. For description purposes, the embodiment of the apparatus for determining 150 is explained with respect to the first receiver 102 as shown in Fig. 1A, except that the receiver in Fig. 1B only supervises one channel, for example the first subchannel $H_1$. The apparatus for determining 150 comprises an estimator 152 and a detector 154. The estimator 152 is configured to receive and estimate a user identifier ui over a subchannel so as, for example, to receive and estimate the first user identifier ui1 which is transmitted to the receiver 102 via the first subchannel $H_1$. The estimator is furthermore configured to estimate, for example, which user identifier ui from an alphabet of different user identifiers is actually sent (i.e. whether the first user identifier ui1 or the second user identifier ui2 is sent). This is, for example, useful if the user identifier sent via the subchannel is distorted due to channel impairments like fading or additive noise. Then the estimator acts like a decider which user identifier is supposed to be sent by the transmitter.

Furhtermore, the estimator can also be configured to decode a "precoded" user identifier which is sent over the respective subchannel, wherein the precoding of the user identifier can be performed by the transmitter or the subchannel allocation signaler in the transmitter 100 as shown in Fig. 1A. This precoding can, for example, be performed in the transmitter to rule out effects of channel impairments resulting when data is transmitted via the channel. Thus, the estimator 152 provides an estimated user identifier eui which is, for example, one user identifier from a predefined set of user identifiers. The estimated user identifier eui is then provided to the detector 154 which has knowledge about the user identifier being assigned to the respective receiver. In the example shown in Fig. 1B, the detector 154 has knowledge about the first user identifier ui1 which is assigned to the first receiver 102. In case the estimated user identifier eui is in a predefined relation with the predefined user identifier, for example if the estimated user identifier eui is equal to the predefined user identifier ui1, the detector outputs an allocation signal AS indicating that the subchannel from which the respective user identifier ui was received is allocated to the receiver for data transmission. With respect to the example as shown in Fig. 1B, the detector 154 outputs the allocation signal AS which indicates that the first subchannel $H_1$ is assigned for a communication between the transmitter and the first receiver 102 in the case that the estimated user identifier eui is equal to the predefined user identifier, wherein the predefined user identifier is equal to the first user identifier ui1. On the contrary, if the detector 154 determines that the estimated user identifier eui is not equal to the first user identifier ui1, the detector 154 outputs an allocation signal AS which indicates that the first subchannel $H_1$ is not assigned to the first receiver 102 for a transmission of data from the transmitter to the first receiver 102.

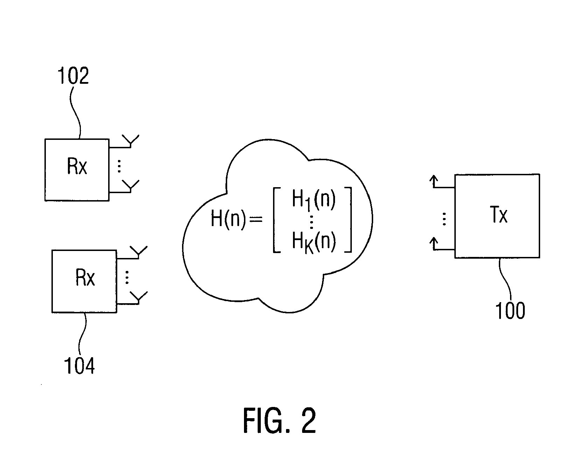

Fig. 2 illustrates an example of the type of systems considered in the present invention. In such point to multipoint settings, a central unit 100 communicates with a number of terminals 102, 104 (users). In wireless systems these terminals 102, 104 typically register in the network by sending a message to the central unit 100 over a random access channel H(n). The central unit 100 acknowledges this message and assigns to the user 102, 104 a numerical identifier that designates that user unambiguously and that is utilized in further signaling procedures. For instance, when transmitting information intended for a specific user 102, 104 over a common broadcast channel.

The physical channel H(n) in such a system can be modeled by a set of matrices $H_1(n)$, ..., $H_n(n)$ corresponding to the channels between the central unit 100 and each of the users 102, 104 and the relationship between transmit and receive signals may be written as in equation 1.1 (as shown above). It is assumed that by any means the base station 100 is able to obtain perfect knowledge of the channel matrices $H_1(n)$, ..., $H_n(n)$ of each of the users on each of the subcarriers. Using this knowledge the central unit 100 structures the transmit signal in the way indicated by equation 1.2 and computes the transmit and receive weighting vectors characterizing the allocated spatial dimensions using the cooperative zero-forcing with successive encoding and successive allocation method as reported in P. Tejera, W. Utschick, G. Bauch, and J.A. Nossek. A Novel Decomposition Technique for Multiuser MIMO. In ITG/IEEE Workshop on Smart Antennas, Duisburg, Apr. 2005 or the international patent application PCT/EP2004/012571. Over the set of effectively decoupled dimensions resulting from the application of this algorithm some power and bit loading might be performed according to some criterion of interest. In the following a signaling concept is described to provide the users with all information needed to perform a correct detection of the signals transmitted over the allocated subchannels.

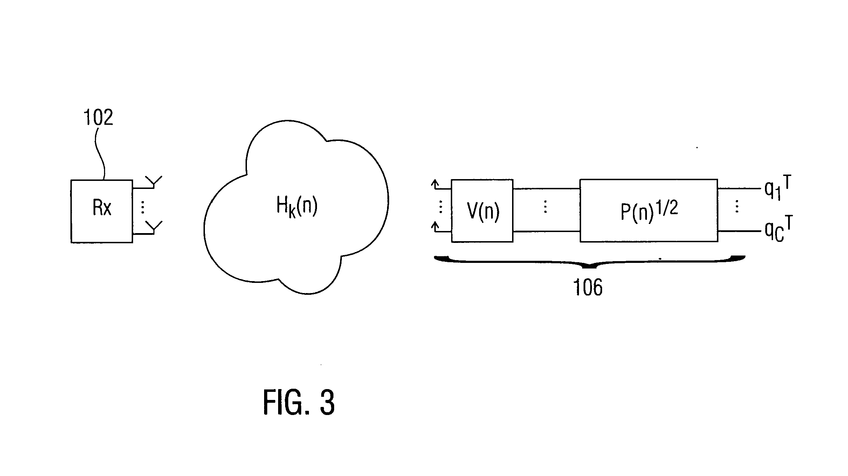

The first step of the signaling procedure consists of the simultaneous transmission of pilot sequences over all precoded channels in the downlink (cf. Fig. 3). On any subcarrier n the precoded matrix seen by user k is given by,

$$\mathbf{M}_k(n) \;=\; \mathbf{H}_k(n)\mathbf{V}(n)\mathbb{P}(n)^{1/2}$$

where $\mathbf{V}(n) = v_{\Pi_n(1)} \ldots v_{\Pi_n(c)}$ and $\mathbf{P}(n) \in C^{c \times c}$ is a diagonal matrix with entries $p_{\Pi_n(c)}$ in the main diagonal. If pilot sequences

$q_c^T$, $1 \leq c \leq C$ are sent over the transmission chain formed by P(n) and V(n) the signal received by any user k over subcarrier n reads

$$\mathbf{Y}_k(n) \;=\; \mathbf{M}_k(n)\mathbb{Q} + \mathbf{N}_k(n), \qquad\qquad (1.3)$$

where $\mathbf{Q} = [q_1 \ldots q_C]^T \in C^{C \times B}$ is a matrix of pilots sequences of length B. Note that this matrix may be the same for all subcarriers and that the maximum number of sequences is equal to the number of transmit elements t. Therefore, these sequences could be a predefined parameter of the system known by all receive terminals. Using this knowledge every receiver is able to estimate the columns of its precoding matrices $M_k(n)$. Of course, the longer the pilot sequences are, the more accurate the estimate is. Also the geometrical properties of the pilot sequences have an impact on the estimation quality. In this regard, the choice of mutually orthogonal vectors as pilot sequences is particularly interesting in order to avoid noise enhancement in case of a maximum likelihood estimation.

For an example (Maximum likelihood estimation of $M_k(n)$) equation 1.3 can be rewritten by stacking the columns of the receive matrix $\mathbf{Y}_k(n) = \left[ \mathbf{y}_k^1(n) \ldots y_k^B(n) \right]$ to form a single column vector $\tilde{y}_k$ as follows,

$$\underbrace{\begin{bmatrix} y_k^1(n) \\ \vdots \\ y_k^B(n) \end{bmatrix}}_{\tilde{y}_k} = \underbrace{\left( Q^T \otimes I_{r_k} \right)}_{\tilde{Q}_k} \begin{bmatrix} m_k^1(n) \\ \vdots \\ m_k^C(n) \end{bmatrix} + \begin{bmatrix} n_k^1(n) \\ \vdots \\ n_k^B(n) \end{bmatrix}, \qquad (1.4)$$

where $m_k^c(n)$ and $n_k^c(n)$ denote the cth columns of matrices Mk(n) and Nk(n) respectively, $I_{r_k}$ is a $r_k$ x $r_k$ unity matrix and $\otimes$ is the Kronecker product.

Assuming uncorrelated noise with variance $\sigma^2$ a maximum likelihood estimate of the coefficients of the precoded channel is obtained as

$$\begin{bmatrix} \hat{m}_k^1(n) \\ \vdots \\ \hat{m}_k^C(n) \end{bmatrix} = \left( \tilde{Q}_k^H \tilde{Q}_k \right)^{-1} \tilde{Q}_k^H \tilde{y}_k,$$

and the covariance matrix of the estimation error is given by $\sigma^2 \left( \tilde{Q}_k^H \tilde{Q}_k \right)^{-1}$. Note that if the pilot sequences are chosen to be orthogonal the estimation errors are uncorrelated and with equal variance for all channel coefficients.

For receiver k, each column of the matrix $M_k(n)$ represents a spatial dimension that receiver might have got assigned by the central unit. Assume that column $m_k^c(n) = H_k(n) v_{n_n(c)} \sqrt{P_{n_n(c)}}$ has been assigned to user k, i.e. $u_n(c) = k$. As described in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571, $v_{n_n}(c)$ is a right singular vector of $H_{u_n(c)}(n)$ in a particular subspace and the receive weighting vector $u_{n_n(c)}^H$ is chosen to be the corresponding left singular vector. Accordingly,

$$m_k^c(n) = \lambda_{n_n(c)} u_{n_n(c)} \sqrt{P_{n_n(c)}},$$

where $\lambda_{\pi_{n(c)}}$ is the gain of subchannel $\pi_n(c)$. Hence, user k can obtain the receive weighting vector for the assigned dimension c by just normalizing the column $m_k^c(n)$ and taking the conjugate transpose of the resulting unit-norm vector. But still users do not know which of the columns of the respective precoded channels they have got assigned.

In order to make users know which dimensions they have got assigned, in the second step of the signaling procedure, over each subchannel a user identifier is transmitted corresponding to the user to which that subchannel has been assigned.

As explained in the introductory portion of the description, subchannels $\pi_n(c' > c)$ do not cause any interference on subchannel $\pi_n(c)$, whereas subchannels $\pi_n(c' < c)$ do cause interference. Therefore, user identifiers should be transmitted using successive encoding and taking into account at each step knowledge of interference caused by previously encoded users to enforce an interference-free transmission.

During transmission of user identifiers, the receivers should try to detect the transmitted signals over every spatial dimension, i.e. over every column of the precoded channel matrices $M_k(n)$. To this end, all possible receive weighting filters should be computed and applied to the receive signal. Assume that on subcarrier n only subchannel $\pi_n(c)$ has been assigned to user k. Filtering the received signal on subcarrier n with $m_k^{c,H}(n) / \left\| m_k^{c,H}(n) \right\|$, user k should be able to detect its own user identifier. On the contrary, filtering the received signal with an other vector $m_k^{c',H}(n) / \left\| m_k^{c',H}(n) \right\|$, a value will be detected that will surely differ from the own user identifier. Note that for detection purposes the user should know the signal constellation employed to transmit the user identifiers. This should be a predefined system parameter.

For another example (Transmission and detection of user identifiers) a system with two users is considered, i.e. K = 2, $r_1 = r_2 =2$ and t=2. At subcarrier n,

$$\mathbf{H}_1(n) = \begin{bmatrix} 3 & 1 \\ 4 & 1 \end{bmatrix}$$

$$\mathbf{H}_2(n) = \begin{bmatrix} 6 & 0 \\ 0 & 1 \end{bmatrix}$$

Using the knowledge of these channels the central unit runs the CZF-SESAM algorithm as disclosed in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571 and results in

$$\pi_n(1) = (2, 1)$$

$$\pi_n(2) = (1, 1)$$

$$v_{\pi_n}(1) = \begin{bmatrix} 1 & 0 \end{bmatrix}^T$$

$$v_{\pi_n}(2) = \begin{bmatrix} 0 & 1 \end{bmatrix}^T$$

Assume that the central unit allocates powers such that $p_{\pi_n}(1) = p_{\pi_n}(2) = 1$, the resulting precoded channel matrices are $M_1(n) = H_1(n)$ and $M_2(n) = H_2(n)$, which can be estimated by the receivers with the help of pilot sequences. Let 1 be the identifier of user 1 and -1 that of user 2. Over subchannel $\pi_n(1)$, -1 is transmitted. Over subchannel $\pi_n(2)$, 1 is transmitted applying some sort of coding so that interference seen by user 1 on this subchannel is eliminated. A technique for doing that is Tomlinson-Harashima precoding as disclosed in G. Ginis and J. Cioffi, "A Multi-user Precoding Scheme achieving Crosstalk Cancellation with Application to DSL Systems", published in the proceedings of the Asilomar Conference on Signals, Systems and Computers, pages 1627-1631, Oct. 2000. This technique first subtracts from the symbols to be sent the interference that will add to the signal when being transmitted over the channel and then, in order to limit transmit power, performs a modulo operation on the resulting value that is compensated with a modulo operation at the transmitter. In this example interference caused by the identifier of user 2 on the subchannel allocated to user 1 is given by

$$\frac{1}{\sqrt{2}} \begin{bmatrix} 1 & 1 \end{bmatrix} \begin{bmatrix} 3 \\ 4 \end{bmatrix} \cdot -1 = -7 / \sqrt{2}.$$

Subtracting this interference from the identifier of user 1, taking into account the gain of subchannel $\pi_n(2)$, it can be obtained,

$$1 - \frac{\sqrt{2}}{2} \cdot \frac{-7}{\sqrt{2}} = 9 / 2.$$

Note that if this value is transmitted over subchannel $\pi_n(2)$ interference from subchannel $\pi_n(1)$ cancels out at the receiver. Unfortunately, this value is much larger than 1 and might violate a possible power constraint at the transmitter. To limit the transmit power, a modulo operation can be applied based on the interval [-2,2]. The value 1/2 is obtained, which is transmitted over subchannel $\pi_n(2)$.
Neglecting noise, over the first dimension user 1 receives the signal

$$\frac{1}{5} \begin{bmatrix} 3 & 4 \end{bmatrix} \begin{bmatrix} 3 & 1 \\ 4 & 1 \end{bmatrix} \begin{bmatrix} -1 \\ 1/2 \end{bmatrix} = -\frac{43}{10},$$

which divided by the channel gain $\lambda = 5$ yields -0.86. This value is within the modulo interval and is detected as -1. Thus, user 1 gets to know that this dimension has not been assigned to it.
Over the second dimension user 1 receives the signal

$$\frac{1}{\sqrt{2}} \begin{bmatrix} 1 & 1 \end{bmatrix} \begin{bmatrix} 3 & 1 \\ 4 & 1 \end{bmatrix} \begin{bmatrix} -1 \\ 1/2 \end{bmatrix} = -3\sqrt{2}.$$

Dividing this value by the channel gain $\lambda = \sqrt{2}$ and applying the modulo operator over the interval [-2,2], a value of 1 is obtained which tells user 1 that it has got this dimension assigned.
Over the first dimension user 2 receives the signal

$$\begin{bmatrix} 1 & 0 \end{bmatrix} \begin{bmatrix} 6 & 0 \\ 0 & 1 \end{bmatrix} \begin{bmatrix} -1 \\ 1/2 \end{bmatrix} = -6,$$

which divided by the channel gain $\lambda = 6$ yields -1, indicating to user 2 that it will be receiving signals over this subchannel.

Finally, over the second dimension user 2 receives the signal

$$\begin{bmatrix} 1 & 0 \end{bmatrix} \begin{bmatrix} 6 & 0 \\ 0 & 1 \end{bmatrix} \begin{bmatrix} -1 \\ 1/2 \end{bmatrix} = 1/2,$$

which is detected as 1 and indicates to the receiver that this dimension should be ignored.

In examples like this one it could occur that, accidentally, a user detects its own identifier in a dimension it has not got assigned. In practice, the probability that this occurs can be made arbitrarily small by using signal constellations with more levels than BPSK and coding techniques, for example QPSK, 8-QAM, 16-QAM or the like.

As each user knows its own identifier, the receivers can make use of this knowledge to improve the estimate of the receive weighting vectors.

In the third phase of a signaling procedure, over any particular subchannel information is transmitted about the signal constellation or bit loading. As in the second phase, this information should be transmitted using an alphabet known by the users that could be a predefined parameter of the system. After this step, users know all parameters required for detection and transmission of data can be started.

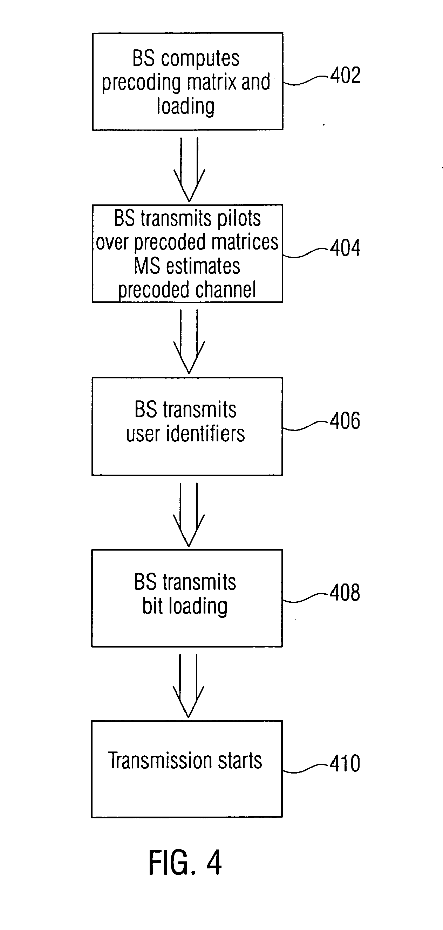

In Fig. 4 the a probable signaling flow of the proposed procedure according to an embodiment of the invention is shown. Herein, in a first step 402, the base station computes a precoding matrix and a loading scheme. In a further second step 404, the base station BS transmits pilots over the precoded matrices and the mobile stations MS estimate the precoded channel. Then, in a thirs step 406 the base station BS transmits user identifiers for each user on the subchannels, which are allocated for a communication link between the base station and the user. Then, in a fourth step 408, the base station BS transmits a bit loading scheme to the users MS in which it is signaled, how much data is transmitted via each of the subchannels. In a final fifth step 410, the transmission of payload data over the subchannels starts.

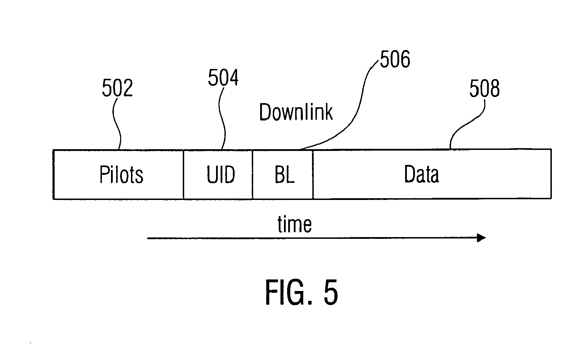

Fig. 5 represents an example of the resulting frame structure for the downlink. In a first time interval 502, pilots are transmitted as shown in step 404 of Fig. 4. Then, in a second time interval 504, the user identifiers UID (as disclosed in step 406 of Fig. 4) are transmitted. Hereafter, in a third time interval 506, a bit loading BL is performed as shown in step 408 in Fig. 4. Finally, payload data is transmitted in a fourth time interval 508 in accordance with the step 410 in Fig. 4. Note that, typically, pilots will be transmitted without performing successive encoding. However, successive encoding is sometimes required for the transmission of identifiers, bit loading parameters and data.

For a low number of users the proposed procedure could be modified to merge the first and second steps into a single step, thus shortening the signaling procedure. This can be done by assigning to each user a different set of pilot sequences, which are used for channel estimation. A particular user utilizes its own pilot sequences for estimation purposes and the transmitter sends over each dimension a pilot sequence corresponding to the user to which that dimension has been assigned. If sequences are chosen to be orthogonal, a user is able to estimate only its assigned dimensions by correlating the receive signal with its known pilot sequences. In order to be able to estimate several dimensions over the same carrier, a user should be given as many pilot sequences as the minimum of its number of receive antennas and the number of transmit elements. Estimates obtained by correlating the received signal with a sequence that was not transmitted will result in a very poor channel over which no recognizable signals will be received. The receiver will be able to discard these false estimates in a subsequent phase. The main drawback of this merging of identifiers and pilot signals is that, already, for a moderate number of users and receive antennas many sequences have to be assigned, which, in order to preserve orthogonality, will become very long.

In the following, a numerical example shall illustrate the advantage of the proposed signaling approach with respect to the standard approach applied to a multiuser multicarrier MIMO system with CZF-SESAM.

Assuming t = 4 transmit antennas, K = 10 users, $r_k$ = 2 receive antennas per user and N = 1024 carriers. The minimum number of bits necessary to reference 10 users is 4. Further it is assumed that the user identifiers are coded with rate 2/3 and transmitted as QPSK symbols, i.e. 3 symbols are necessary to transmit a user identifier. In the standard approach a user identifier would precede a kind of lookup table with all assigned subcarriers and spatial dimensions represented by receive weighting vectors (see Fig. 6). Reference to a subcarrier needs at least 10 bits, which if transmitted uncoded over a QPSK constellation make up 5 symbols. Each of the receive weighting vectors or beams is represented by a pair of complex values or equivalently 4 real numbers in the interval [-1,1]. If this interval is quantized in 16 segments, each real value is represented with 4 bits and, thus, using QPSK a total of 8 symbols are required to represent a weighting vector. Assuming that all space-frequency dimensions are assigned, the total amount of symbols required to reference all these dimensions is greater or equal to 2 x 1024 x (5 + 2 x 8) = 43008, where it has been considered that every subcarrier is referenced in the tables of at least two different users and that the maximum number of beams assigned to a specific user on a given carrier is two. To this number the symbols should be added that are needed to reference users, i.e., provided that all users get some dimensions, 30 symbols. Also some additional symbols would be required to indicate the end of every beams field in the lookup tables and the end of each lookup table. Further it is considered that at the end of each beams field and each lookup table three symbols are inserted for these formatting purposes. Considering that all carriers are assigned and all users get some dimensions, the number of required formatting symbols is equal to or greater than 2 x 1024 x 3 + 10 x 3 = 6174. If the symbols required to reference dimensions and users and formatting symbols are added, a total of at least 49212 symbols is obtained. This number of symbols constitutes a conservative estimate of the information content that should be transmitted over the common signaling link in the standard approach. Assume that for the common signaling link a time slot is allocated at the beginning of a frame and that an OFDM scheme with 1024 carriers is also used for transmission in this link. The number of OFDM symbols required for the transmission of signaling symbols over the common signaling link is $\lceil 49212/1024 \rceil$ = 49. If to this number 4 more OFDM symbols used as pilots for channel estimation are added, a total of 53 OFDM symbols are obtained that are required for signaling purposes over the common signaling link of the standard signaling approach (see Fig. 7). After transmission of the common signaling link, first, pilots should be transmitted to allow the receivers to estimate their assigned channels and, finally, some symbols should be allocated to indicate the bit load or signal constellation used for data transmission. Considering pilot sequences with 8 symbols and two more symbols to indicate the bit load, the total signaling overhead in the standard signaling approach would amount to 63 OFDM symbols. The reasons for taking longer training sequences for the estimation of precoded subchannels than for the estimation of channels in the common signaling link is that, while in the common signaling link it will be possible to exploit correlation among subcarriers to improve the estimate, the precoding resulting from the CZF-SESAM algorithm breaks the correlation properties of the channel in the frequency domain and, as a consequence, more pilots will be needed to achieve the same quality in the estimate.

Coming back to the novel signaling approach described in the previous section, it can be observed that the amount of OFDM symbols required for signaling purposes reduces to 8+3+2 = 13. For this calculation it has been assumed that the length of the pilot sequence and the number of symbols required to reference users or indicate bit load are chosen as in the standard approach. It can be observed that the overhead reduces approximately a 79.4 % in this example, in which ver conservative figures in favor of the standard approach have been chosen. Furthermore, while the overhead of the standard approach increases as the number of users in the system increases, the overhead of the novel signaling approach keeps constant with respect to the number of users as long as all of them can be referenced with the number of symbols allocated to that purpose.

The algorithm CZF-SESAM was initially proposed for white noise scenatios. A straight forward extension to colored noise scenarios involves the application of a noise whitening stage in the receiver structure. In this kind of scenario the downlink signaling concept described above can be straightforwardly applied. The only difference is that, rather than the physical channels, the base station should now know the effective channels of users in the system. In a TDD scheme, in order to permit the base station to estimate the effective channels in the uplink, any user k should transmit pilots over the matrix $H_k^T R_k^{T/2}$ instead of transmitting pilots over the physical channel $H_k$, i.e. the pilots should be precoded at the mobile station with the transpose of the corresponding whitening matrix. Over these effective channels, the base station executes the CZF-SESAM algorithm and the downlink signaling occurs as described previously. However, in order to correctly detect information sent by the base station during this phase, the mobile station should consider receive signals at the output of the whitening filter rather than signals at the output of the physical channel.

To be more specific, the determination of sub-channels of a communication channel can be performed as described in the following section. Herein geometrical characteristics of the channel are exploited. For a more detailed analysis, reference is made on the international patent application PCT/EP2004/012571.

The idea described in the international patent application PCT/EP2004/012571 is based on the finding that an efficient multi-user transmission system can be provided, when different user signals being associated with different users are transmitted within different subspaces, the subspaces being orthogonal to each other, wherein each user transmitter transmitting within the inventive communication environment may be assigned a unique and user-specific subspace for transmission.

The finding is based on the fact that a user signal in digital domain comprising a plurality of coefficients can be viewed as a vector arranged within a space, in which the coefficients of the vector are arranged.

For example, a user signal comprising three coefficients can be considered as being a vector arranged within a three-dimensional space, the space being spanned by orthogonal eigenvectors being associated with eigenvalues or singular values. Moreover, an eigenvalue associated with an eigenvector may be considered as being an attenuation or amplification factor being associated with a space direction determined by the eigenvector.

According to the idea described in the international patent application PCT/EP2004/012571 , the user signals may be associated with a certain, common frequency, which may result when assigning signals to sub-carriers in a multicarrier system. In order to transmit the signals at the certain frequency, the subspaces may be subspaces associated with the certain frequency. Moreover, according to the idea described in the international patent application PCT/EP2004/012571 , other user signals associated with another frequency may be projected on other subspaces being orthogonal to each other. In addition, the available bandwith can efficiently be exploited for e.g. a multi-user transmission since the same frequency band can be used for a plurality of user signals sharing same frequencies but being transmitted within different subspaces.

In this context, the term "subspace" refers to a partial part of a space. Referring again to the above example, a subspace associated with a three-dimensional space may be for example a plane spanned by eigenvectors being associated with e.g. a first and a second direction (e.g. x, y components). However, a subspace may also be spanned by only one eigenvector. In this case, the subspace is one-dimensional. Generally speaking, a subspace being associated with a space has less dimensions than the space itself.

The inventive approach is simple, since known geometric and linear signal processing methods, for example rotation, projection or subspace-selective processing, where e.g. only some signal components being associated with certain subspaces are processed, are to be implemented.

The idea described in the international patent application PCT/EP2004/012571 exploits the geometric interpretation of digital signals and provides a concept for processing and separation of multi-user signals , where different user signals being associated with different users are projected onto different subspaces, wherein any subspace is orthogonal to any other subspace.

For example, a base-station employing the inventive concept for transmitting a multi-user signal to a first receiver and to a second receiver being spatially separated from the first receiver and from the base-station may be configured for processing a first user signal to be received by the first receiver and a second user signal to be received by the second receiver. In order to enable e.g. an efficient multi-user separation at the receivers, the base-station may be configured, in accordance with the idea described in the international patent application PCT/EP2004/012571 , for projecting the first user signal onto a first subspace, for projecting the second user signal onto a second subspace, the second subspace being orthogonal with respect to the first subspace, and for superimposing the resulting spatially separated signals in order to obtain a transmit signal to be simultaneously transmitted by e.g. a plurality of transmitting points to the first and to the second receiver. If channel influences are perfectly removed at a respective receiver, than the first receiver can extract the first user signal from a received version of the transmit signal by capturing the first subspace while suppressing the second subspace. Correspondingly, the second receiver may be configured for capturing the second subspace in order to extract the second user signal and to suppress the first subspace containing the first user signal.

However, if the communication channels, i.e. if a first communication channel extending between the transmitter and the first receiver and the second communication channel extending between the transmitter and the second receiver are non-orthogonal with respect to each other, then interference may appear. In this case, the receiver may be configured for equalizing the channels in order to remove the interferences for capturing the respective subspace.

In addition to the equalization concept, the idea described in the international patent application PCT/EP2004/012571 further provides a concept for dealing with non-orthogonal channels in order to prevent for interferences corrupting the respective separated user signal, wherein only certain sub-spaces are chosen.

Instead of orthogonalizing the channels, i.e. instead of controllably introducing interferences into the first and second user signal for compensating the interferences resulting when transmitting through physical communication channels, the idea described in the international patent application PCT/EP2004/012571 provides a concept based on linear projections of the signals onto different "channel subspaces", wherein e.g. the first signal is projected onto a first subspace of a space being determined by coefficients of the first channel extending between the transmitter and the first receiver, and where the second user signal is projected onto a second subspace of a space being determined by coefficients of the second channel extending between the transmitter and the second receiver are arranged.

In other words, instead of orthogonalizing the channels, only certain "channel subspaces" being orthogonal to each other are used for transmitting different user signals, wherein "channel subspaces" being non-orthogonal with respect to other "channel subspaces" are excluded from transmitting the user signals.

For example, the transmitter comprises t transmitting points, each transmitting point comprising an antenna, wherein the transmit signal comprising t coefficients is to be simultaneously transmitted by the t transmitting points, i.e. wherein each coefficient of the transmit signal is to be transmitted by a different transmitting point. In case of t being greater than one, the resulting channel is determined by different paths associated with each transmitting point. Hence, the channel coefficients may be arranged to form a matrix comprising a plurality of columns and e.g. t rows or vice versa.

In order to enable the inventive user separation at a respective receiver by transmitting the first user signal and the second user signal within subspaces being orthogonal to each other, and in order to reduce interferences due to a non-orthogonality of the communication channels, the first subspace, onto which the first user signal is to be projected, is a subspace of a space in which the coefficient of the first channel matrix are arranged. Furthermore, according to the idea described in the international patent application PCT/EP2004/012571 , the second subspace is a certain subspace of a space in which coefficients of the second channel matrix are arranged. More specifically, the second subspace is chosen from the space, in which the coefficients of the second channel matrix are arranged, such that the second subspace is orthogonal to the first subspace. Since the different user signals are projected onto orthogonal subspaces depending on the respective channel, the interferences may be completely eliminated or, at least, reduced in spite of the fact that the transmit signal is transmitted through non-orthogonal channels.

The idea described in the international patent application PCT/EP2004/012571 further provides a possibility for a spatial- and user selective assigning communication resources to different users depending on certain transmission requirements like e.g. quality of service, bit error rate, delay, etc. Referring again to the example with the two user signals, the first user signal may require more bandwidth than the second user signal. In this case, the first subspace may be chosen such that it has more dimensions than the complementary second subspace to be used for transmitting the second user signal. For example, the subspace assignment may be performed in a plurality of subsequent steps. In a first step, the first subspace having a sufficiently large dimension for increasing the data rate or being spanned by eigenvectors associated with large eigenvalues for reducing attenuation, or, generally, in order to fulfill the transmission requirement being associated with transmitting the first user signal, is chosen. Since the first and the second communication channel may be non-orthogonal to each other, then the first subspace may have components overlapping with the space, in which coefficients of the second channel are arranged. Therefore, the second subspace can be chosen from a resulting complementary space, in which coefficients of the second channel are arranged, the complementary space resulting when excluding the overlapping components of the first subspace from the space from which coefficients of the second channel are arranged.

The idea described in the international patent application PCT/EP2004/012571 further provides a possibility for a spatial- and user selective assigning communication resources to different users depending on certain transmission requirements like e.g. minimum channel attenuation, transmission delay, user priority, bit rate, bit error rate etc.

In reference to the above discussed example in respect to the two user signals, the components of the first and second subspace, i.e. the eigenvectors spanning the first subspace and the eigenvectors spanning the second subspace, may successively be determined during subsequent iteration steps. In other words, instead of successively determining subspaces, which is the inventive concept described above, for example, eigenvectors e.g. either for the first or for the second subspace may be determined. Therefore, certain characteristics of single eigenvalues associated with the eigenvectors to be chosen can be taken into account while successively, for example, iteratively, determining the first and the second subspace such that both subspaces are orthogonal with respect to each other. Therefore, certain subspace properties can explicitly be taken into account.

A possible subspace property may be associated with a transmission property, since e.g. attenuation may directly depend on eigenvalues associated with eigenvectors spanning the subspace. In this case, it would be of interest to select eigenvectors being associated with largest eigenvalues. For example, in a first iteration step, an eigenvector associated with a largest eigenvalue among available eigenvalues is chosen, for example for the first or second user. Subsequently, a subspace being spanned by the chosen eigenvector may be subtracted from the available subspace in order to obtain a reduced subspace for further iterations.

In a further iteration step, the reduced subspace may be subject to performing a singular value decomposition in order to obtain eigenvalues and eigenvectors associated therewith, the eigenvectors spanning the reduced subspace. In a further iteration step, the eigenvalues may be analyzed in order to determine e.g. a further largest value among the determined eigenvalues. For example, the further largest eigenvalue may be assigned to a first or to a second user, depending on e.g. a user requirement like e.g. a bit error rate, quality of service, delay etc, or depending on the suitability of the eigenvector for the respective user.

In a further iteration step, a subspace being spanned by the previously selected eigenvectors may be subtracted from the available subspace to obtain a complementary subspace serving as a basis for further iterations and so forth. The iteration may stop when all available dimensions being associated with the available subspace are assigned to users, or when the remaining dimensions are associated with e.g. small eigenvalues, e.g. 0.01 the largest eigenvalue, so that a significant attenuation is to be expected for the corresponding spatial directions so that these directions are not taken into account. At the end of the iterations, the eigenvectors being assigned to the first user span the first subspace and the eigenvectors being assigned to the second user span the second subspace. Since, in each iteration, the already assigned subspace may subtracted from the currently available subspace, in the following a complementary space is taken into consideration. Therefore, orthogonality between the resulting first and second subspace can always be achieved.

In this context, the term "orthogonal" relates to the case, where an ideal and rounding error-free determination of eigenvectors spanning the sub-spaces can be performed. However, when digitally calculating the eigenvectors, only a limited computation accuracy may be achieved so that an orthogonality error due to e.g. due to a finite wordlength or rounding error may occur. Therefore, in the following, the term "orthogonal" relates e.g. to vectors, being orthogonal within an orthogonality range extending between e.g. 0 and 0.001, 0 and 0.01 or 0 and 0.1 (e.g. in relation to non-orthogonality), depending on a computational accuracy.

Thus, in a preferred embodiment, the inventive apparatus for signaling further comprises:

a generator being configured for generating a first set of weighting coefficients and for generating a second set of weighting coefficients, the first set of weighting coefficients to be used for weighting a first user signal associated with the first receiver to obtain a first transmit signal, the second set of weighting coefficients to be used for weighting a second user signal associated with the second receiver to obtain a second transmit signal, the generator further comprising:

a calculator being configured for calculating m eigenvectors spanning a first subspace of a space, m being equal to or greater than 1, the m eigenvectors forming the first set of weighting coefficients for the first receiver, and for calculating n eigenvectors spanning a second subspace of a further space, the second subspace being orthogonal to the first subspace, n being equal to or greater than 1, the n eigenvectors forming the second set of coefficients for the second receiver, such that the first transmit signal represents a projection of the first user signal onto the first subspace and the second transmit signal represents a projection of the second user signal onto the second subspace,

wherein the subchannel allocation signaler is configured to transmit the first user identifier using the first set of weighting coefficients and to transmit the second user identifier using the second set of weighting coefficients.

Summarizing, a new signaling concept is presented to provide to the users of a multiple output multiple input and possibly multicarrier system with the required information about the resource allocation, channel condition and transmission parameters that overcomes the main drawbacks of the standard signaling approach.

Rather than broadcasting information about the resource allocation in the first step, an embodiment of the present inventive method first broadcasts pilot sequences over the precoded channels so that every receiver in the system is able to estimate all spatial dimensions allocated by the transmitter. In a second step, a user identifier is sent over each spatial dimension that allows the receivers to know the dimensions they have been allocated. Finally, transmission parameters such as bit loading can be transmitted over each allocated subchannel.

This approach does not require the existence of a signaling broadcast channel and hence bandwidth is saved. Pilots should be also sent in a conventional approach to estimate the allocated subchannel, therefore, the transmission of pilots does not represent additional bandwidth if compared with standard signaling schemes. The user identifier reveals the resource allocation to the users and represents the additional bandwidth exclusively allocated to this end, which is quite modest if compared with the bandwidth that would be needed to operate a signaling broadcast channel. Moreover, as the user identifiers are known by the respective receivers, this information can be used to improve channel estimation.

A new general concept for signaling in point to multipoint systems has been introduced, in which context the invention can be applied. This general procedure can be seen in three steps:

- Broadcast pilot sequences over the allocated resources.
- Transmission of a user identifier over each allocated portion of resources and
- Transmission of further transmission parameter over each allocated portion of resources.

This general concept is especially adequate for point to multipoint systems with multiple inputs and multiple outputs. In such systems, the allocation of resources computed at the central unit by a decomposition algorithm such as that proposed in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571 can be signaled to the receive terminals by:

- Transmitting pilot sequences over the chain formed by the power allocation matrix, which indicates the power used for transmission over any particular dimension, and the precoding matrix resulting from the application of the CZF-SESAM algorithm described in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571. These sequences might be orthogonal or arbitrary sequences, though the former present some advantages for the estimation of the precoded channels. These sequences will be, typically, transmitted without applying any kind of successive encoding technique.

- Transmitting over each subchannel a user identifier using predefined signal constellations and/or successive encoding to suppress interference.

- Transmitting over each subchannel information about the bit loading or signal constellation used for data transmission. This information should be transmitted using predefined signal constellations and/or a successive encoding technique to suppress interference.

Alternatively, the first and second steps could be merged into a single step by assigning to each user a set of as many pilot sequences as the minimum of its number of receive antennas and the number of transmit elements. In this case, the allocation of resources computed at the central unit by a decomposition algorithm such as proposed in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571 can be signaled to the receive terminals by:

- Transmitting pilot sequences over the chain formed by the power allocation matrix, which indicates the power used for transmission over any particular dimension, and the precoding matrix resulting from the application of the CZF-SESAM algorithm described in P. Tejera, W. Utschick, G. Bauch, and J.A. Nossek, "A Novel Decomposition Technique for Multiuser MIMO", published in ITG/IEEE Workshop on Smart Antennas, Duisburg, Apr. 2005 or the international patent application PCT/EP2004/012571, wherein for each spatial dimension a pilot sequence should be chosen that corresponds to the user to which that spatial dimension has been assigned. If on a particular subcarrier a user is assigned more than one dimension, different pilot sequences among those assigned to that user should be chosen for different dimensions. Pilot sequences might be orthogonal or arbitrary sequences, though the former present some advantages for the estimation of the precoded channels. These sequences will be, typically, transmitted without applying any kind of successive encoding technique.
- Transmitting over each subchannel information about the bit loading or signal constellation used for data transmission. This information should be transmitted using predefined signal constellations and/or a successive encoding technique to suppress interference.

In this last approach the users are not explicitly told which dimensions they have got assigned. However, in case an estimate does not correspond to an assigned subchannel, the resulting subchannel will be so poor that receive signals will not be recognizable and the receive terminal will be able to discard that dimension subsequently.

Depending on certain implementation requirements, the inventive method can be implemented in hardware or in software. The implementation can be performed using a digital storage medium, in particular, a disc or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods, when the computer program product runs on a computer. In other words, the inventive methods are, therefore, a computer program having a program code for performing the inventive methods, when the computer program runs on a computer.

**Claims**

1. Apparatus for signaling an allocation of a first communication link between a transmitter (100) and a first receiver (102) to a first subchannel ($H_1$) of a communication channel and for signaling an allocation of a second communication link between the transmitter (100) and a second receiver (104) to a second subchannel ($H_2$) of a communication channel, the first and second subchannels ($H_1$, $H_2$) being different from each other, the apparatus comprising:

    a subchannel allocation signaler (106) being configured to transmit a first user identifier (ui1) over the first subchannel ($H_1$) and to transmit a second user identifier (ui2) over the second subchannel ($H_2$), the first and second user identifiers (ui1, ui2) being different from each other, wherein the first user identifier (ui1) is assigned to the first receiver (102) and the second user identifier (ui2) is assigned to the second receiver (104).

2. Apparatus according to claim 1, wherein the subchannel allocation signaler (106) is configured to use a pilot sequence or a predefined signal constellation as the first or second user identifier (ui1, ui2).

3. Apparatus according to claim 2, wherein the subchannel allocation signaler (106) is configured to choose a first pilot sequence as a first user identifier (ui1) and to choose a second pilot sequence as a second user identifier (ui2), the first and the second pilot sequences being orthogonal to each other.

4. Apparatus according to one of claims 1 to 3, wherein the communication channel is a multiple-input-multiple-output channel and wherein the subchannel allocation signaler (106) is configured to identify the first subchannel ($H_1$) by

a first spacial dimension and to identify the second subchannel ($H_2$) by a second spatial dimension, the first and second spacial dimensions being different from each other.

5.  Apparatus according to one of claims 1 to 4, further comprising:

    a generator being configured for generating a first set of weighting coefficients and for generating a second set of weighting coefficients, the first set of weighting coefficients to be used for weighting a first user signal associated with the first receiver (102) to obtain a first transmit signal, the second set of weighting coefficients to be used for weighting a second user signal associated with the second receiver (104) to obtain a second transmit signal, the generator comprising:

    a calculator being configured for calculating m eigenvectors spanning a first subspace of a space, m being equal to or greater than 1, the m eigenvectors forming the first set of weighting coefficients for the first receiver, and for calculating n eigenvectors spanning a second subspace of a further space, the second subspace being orthogonal to the first subspace, n being equal to or greater than 1, the n eigenvectors forming the second set of coefficients for the second receiver (104), such that the first transmit signal represents a projection of the first user signal onto the first subspace and
    the second transmit signal represents a projection of the second user signal onto the second subspace,

    wherein the subchannel allocation signaler (106) is configured to transmit the first user identifier (ui1) using the first set of weighting coefficients and to transmit the second user identifier using (ui2) the second set of weighting coefficients.

6.  Apparatus according to one of claims 1 to 5, wherein the subchannel allocation signaler (106) comprises knowledge about transmission characteristics of the first or second subchannel ($H_1$, $H_2$) and wherein the subchannel allocation signaler (106) is furthermore configured to precode the first user identifier (ui1) in response to the transmission characteristics of the first subchannel ($H_1$) or to precode the second user identifier (ui2) in response to the transmission characteristics of the second subchannel ($H_2$).

7.  Apparatus according to one of claims 1 to 6, wherein the first subchannel ($H_1$) and a third subchannel are assigned to the first communication link between the transmitter (100) and the first receiver (102), the first and third subchannels being different from each other and wherein the subchannel allocation signaler (106) is configured to transmit the first user identifier (ui1) over the third subchannel.

8.  Method for signaling an allocation of a first communication link between a transmitter (100) and a first receiver (102) to a first subchannel ($H_1$) of a communication channel and for signaling an allocation of a second communication link between the transmitter (100) and a second receiver (104) to a second subchannel ($H_2$) of a communication channel, the first and second subchannels ($H_1$, $H_2$) being different from each other, the method comprising the following step:

    subchannel allocation signaling being performed by transmitting a first user identifier (ui1) over the first subchannel ($H_1$) and transmitting a second user identifier (ui2) over the second subchannel ($H_2$), the first and second user identifiers (ui1, ui2) being different from each other, wherein the first user identifier (ui1) is assigned to the first receiver (102) and the second user identifier (ui2) is assigned to the second receiver (104).

9.  Apparatus (150) for determining an allocation of a communication link between a transmitter (100) and a receiver (102) to a subchannel ($H_1$) of a communication channel on the basis of a predefined user identifier (ui1) being assigned to the receiver (102), the apparatus (150) comprising:

    an estimator (152) being configured to estimate a user identifier (ui) received over the subchannel ($H_1$) in order to obtain an estimated user identifier (eui); and
    a detector (154) for accepting the allocation of the communication link between the transmitter (100) and the receiver (102) to the subchannel ($H_1$), if the estimated user identifier (eui) is in a predefined relation with the predefined user identifier (ui1) and for rejecting the allocation of the communication link between the transmitter (100) and the receiver (152) to the subchannel ($H_1$) if the estimated user identifier (eui) is not in the predefined relation with the predefined user identifier (ui1).

10. Apparatus according to claim 9, wherein the estimator (152) is configured to estimate the estimated user identifier (eui) from a pilot sequence or a predefined signal constellation (ui1).

**11.** Apparatus according to one of claims 9 or 10, wherein the estimator (152) is configured to decode the user identifier (ui1) using a decoding rule in order to obtain the estimated user identifier (eui), wherein the decoding rule is a channel-decoding rule or a decryption rule

**12.** Apparatus according to one of claims 9 to 11, wherein the estimator (152) is configured to estimate a second user identifier received over a second subchannel in order to obtain an second estimated user identifier, the second subchannel being different from the subchannel ($H_1$) and the second user identifier being different from the user identifier (ui) and wherein the detector (154) is configured to reject the allocation of the second subchannel to a communication link between the transmitter (100) and the receiver (152) if the second estimated user identifier (eui) is not in the predefined relation with the predefined user identifier (ui1).

**13.** Apparatus according to claim 12, further comprising:

an identifier being configured for identifying the fist subchannel and the second subchannel and for providing the estimator (152) with information for identifying the first and second subchannels.

**14.** Apparatus according to claim 12 or 13, wherein the estimator (152) is configured to use a first pilot sequence for an estimation of the estimated user identifier (ui1) and to use a second pilot sequence for an estimation of the second user identifier, wherein the estimator (152) is configured to perform the estimation using a knowledge about an orthogonality between the first and the second pilot sequence.

**15.** Apparatus according to one of claims 12 to 14, wherein the communication channel is a multiple-input-multiple-output channel and wherein the estimator (152) is configured to identify the first subchannel ($H_1$) by a first spacial dimension and to identify the second subchannel ($H_2$) by a second spatial dimension, the first and second spacial dimensions being different from each other.

**16.** Apparatus according to one of claims 12 to 15, wherein the first subchannel ($H_1$) and a third subchannel are assigned to the communication link between the transmitter (100) and the first receiver (102), the first and third subchannels being different from each other and wherein the estimator (152) is configured to receive a third user identifier over the third subchannel and to estimate a third estimated user identifier from the received third user identifier and wherein the detector (154) is configured to allocate the third subchannel to the communication link between the transmitter (100) and the receiver (102), if the third estimated user identifier is in the predefined relation with the predefined user identifier (ui1).

**17.** Method for determining an allocation of a communication link between a transmitter (100) and a receiver (102) to a subchannel ($H_1$) of a communication channel on the basis of a predefined user identifier (ui1) being assigned to the receiver (102), the method comprising the steps of:

estimating a user identifier (ui) received over the subchannel ($H_1$) in order to obtain an estimated user identifier (eui); and
accepting the allocation of the communication link between the transmitter (100) and the receiver (102) to the subchannel ($H_1$), if the estimated user identifier (eui) is in a predefined relation with the predefined user identifier (ui1) and rejecting the allocation of the communication link between the transmitter (100) and the receiver (152) to the subchannel ($H_1$) if the estimated user identifier (eui) is not in the predefined relation with the predefined user identifier (ui1).

**18.** Computer program having a program code for performing the methods according to claims 8 or 17, when the computer program runs on a computer.

**Amended claims in accordance with Rule 86(2) EPC.**

**1.** Apparatus for signaling an allocation of a first communication link between a transmitter (100) and a first receiver (102) to a first subchannel ($H_1$) of a communication channel and for signaling an allocation of a second communication link between the transmitter (100) and a second receiver (104) to a second subchannel ($H_2$) of a communication channel, the first and second subchannels ($H_1$, $H_2$) being different from each other, the apparatus comprising:

a subchannel allocation signaler (106) being configured to transmit a first user identifier (ui1) over the first subchannel ($H_1$) and to transmit a second user identifier (ui2) over the second subchannel ($H_2$), the first and second user identifiers (ui1, ui2) being different from each other, wherein the first user identifier (ui1) is assigned to the first receiver (102) and the second user identifier (ui2) is assigned to the second receiver (104),

wherein the subchannel allocation signaler (106) is configured to choose a first pilot sequence as a first user identifier (ui1) and to choose a second pilot sequence as a second user identifier (ui2), the first and the second pilot sequences being orthogonal to each other.

**2.** Apparatus according to claim 1, wherein the communication channel is a multiple-input-multiple-output channel and wherein the subchannel allocation signaler (106) is configured to identify the first subchannel ($H_1$) by a first spacial dimension and to identify the second subchannel ($H_2$) by a second spatial dimension, the first and second spacial dimensions being different from each other.

**3.** Apparatus according to one of claims 1 to 2, further comprising:

a generator being configured for generating a first set of weighting coefficients and for generating a second set of weighting coefficients, the first set of weighting coefficients to be used for weighting a first user signal associated with the first receiver (102) to obtain a first transmit signal, the second set of weighting coefficients to be used for weighting a second user signal associated with the second receiver (104) to obtain a second transmit signal, the generator comprising:

a calculator being configured for calculating m eigenvectors spanning a first subspace of a space, m being equal to or greater than 1, the m eigenvectors forming the first set of weighting coefficients for the first receiver, and for calculating n eigenvectors spanning a second subspace of a further space, the second subspace being orthogonal to the first subspace, n being equal to or greater than 1, the n eigenvectors forming the second set of coefficients for the second receiver (104), such that the first transmit signal represents a projection of the first user signal onto the first subspace and the second transmit signal represents a projection of the second user signal onto the second subspace,

wherein the subchannel allocation signaler (106) is configured to transmit the first user identifier (ui1) using the first set of weighting coefficients and to transmit the second user identifier using (ui2) the second set of weighting coefficients.

**4.** Apparatus according to one of claims 1 to 3, wherein the subchannel allocation signaler (106) comprises knowledge about transmission characteristics of the first or second subchannel ($H_1$, $H_2$) and wherein the subchannel allocation signaler (106) is furthermore configured to precode the first user identifier (ui1) in response to the transmission characteristics of the first subchannel ($H_1$) or to precode the second user identifier (ui2) in response to the transmission characteristics of the second subchannel ($H_2$).

**5.** Apparatus according to one of claims 1 to 4, wherein the first subchannel ($H_1$) and a third subchannel are assigned to the first communication link between the transmitter (100) and the first receiver (102), the first and third subchannels being different from each other and wherein the subchannel allocation signaler (106) is configured to transmit the first user identifier (ui1) over the third subchannel.

**6.** Method for signaling an allocation of a first communication link between a transmitter (100) and a first receiver (102) to a first subchannel ($H_1$) of a communication channel and for signaling an allocation of a second communication link between the transmitter (100) and a second receiver (104) to a second subchannel ($H_2$) of a communication channel, the first and second subchannels ($H_1$, $H_2$) being different from each other, the method comprising the following step:

subchannel allocation signaling being performed by transmitting a first user identifier (ui1) over the first subchannel ($H_1$) and transmitting a second user identifier (ui2) over the second subchannel ($H_2$), the first and second user identifiers (ui1, ui2) being different from each other, wherein the first user identifier (ui1) is assigned to the first receiver (102) and the second user identifier (ui2) is assigned to the second receiver (104), wherein the step of subchannel allocation signaling comprises choosing a first pilot sequence as a first user identifier (ui1) and choosing a second pilot sequence as a second user identifier (ui2), the first and the second pilot sequences being orthogonal to each other.

**7.** Apparatus (150) for determining an allocation of a communication link between a transmitter (100) and a receiver (102) to a subchannel ($H_1$) of a communication channel on the basis of a predefined first pilot sequence (ui1) being assigned to the receiver (102), wherein the transmitter is configured for sending a first pilot sequence over a first subchannel and for sending a second pilot sequence over a second subchannel, the second subchannel being different from the first subchannel, the first and second pilot sequences being orthogonal to each other, the apparatus (150) comprising:

> an estimator (152) being configured to correlate a receive signal from the subchannel ($H_1$) with the predefined first pilot sequence; and
> a detector (154) for accepting the allocation of the communication link between the transmitter (100) and the receiver (102) to the subchannel ($H_1$), if the correlation of the receive signal with the first pilot sequence is in a predefined relation with the first pilot sequence and for rejecting the allocation of the communication link between the transmitter (100) and the receiver (152) to the subchannel ($H_1$) if the correlation of the receive signal with the first pilot sequence is not in the predefined relation with the first pilot sequence.

**8.** Apparatus according to claim 7, wherein the communication channel is a multiple-input-multiple-output channel and wherein the estimator (152) is configured to identify the first subchannel ($H_1$) by a first spacial dimension and to identify the second subchannel ($H_2$) by a second spatial dimension, the first and second spacial dimensions being different from each other.

**9.** Apparatus according to one of claims 7 to 8, wherein the first subchannel ($H_1$) and a third subchannel are assigned to the communication link between the transmitter (100) and the first receiver (102), the first and third subchannels being different from each other, the transmitter being configured for transmitting the first pilot sequence over the third subchannel and wherein the estimator (152) is configured to correlate a further receive signal from the third subchannel with the first pilot sequence and wherein the detector (154) is configured to allocate the third subchannel to the communication link between the transmitter (100) and the receiver (102), if the correlation of the further receive signal with the first pilot sequence is in a predefined relation with the first pilot sequence.

**10.** Method for determining an allocation of a communication link between a transmitter (100) and a receiver (102) to a subchannel ($H_1$) of a communication channel on the basis of a predefined first pilot sequence being assigned to the receiver (102), wherein a first pilot sequence ist send over a first subchannel and a second pilot sequence is send over a second subchannel, the second subchannel being different from the first subchannel and the first and second pilot sequences being orthogonal to each other, the method comprising the steps of:

> correlating a receive signal from the subchannel ($H_1$) with the predefined first pilot sequence; and
> accepting the allocation of the communication link between the transmitter (100) and the receiver (102) to the subchannel ($H_1$), if the correlation of the receive signal with the first pilot sequence is in a predefined relation with the first pilot sequence and rejecting the allocation of the communication link between the transmitter (100) and the receiver (152) to the subchannel ($H_1$) if the correlation of the receive signal with the first pilot sequence is not in the predefined relation with the first pilot sequence.

**11.** Computer program having a program code for performing the methods according to claims 6 or 10, when the computer program runs on a computer.

100   106                                                    102

Subchannel
allocation        ui1        H₁                    ui1 Receiver 1
signaller
                  ui2        H₂                    ui2 Receiver 2

Transmitter              Communication                      104
                         Channel

FIG. 1A

152　　　　　150　　　154

| | | |
|---|---|---|
| $H_1$ | ui → Estimator | eui → Detector ui1 | AS → |

Receiver 1

102

FIG. 1B

102

Rx

$$H(n) = \begin{bmatrix} H_1(n) \\ \vdots \\ H_K(n) \end{bmatrix}$$

Tx

100

Rx

104

FIG. 2

FIG. 3

BS computes precoding matrix and loading —402

BS transmits pilots over precoded matrices MS estimates precoded channel —404

BS transmits user identifiers —406

BS transmits bit loading —408

Transmission starts —410

FIG. 4

502 504 506 508

Downlink

| Pilots | UID | BL | Data |

time →

FIG. 5

| User ID | Carrier 1 | Beams | · · · | Carrier n | Beams |

time →

# FIG. 6

Common Signaling Link

| Pilots | Lookup 1 | ··· | Lookup 10 | Pilots | BL | Data |

time →

# FIG. 7

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/179627 A1 (KETCHUM JOHN W ET AL) 16 September 2004 (2004-09-16) * page 1, column 2, paragraph 12 * * page 1, column 2, paragraph 13 * * page 6, column 2, paragraph 80 * * page 7, column 2, paragraph 93 * * page 12, column 2, paragraph 185 * * figures 4,7A * | 1-18 | H04L27/26 |
| X | EP 1 443 680 A (NATIONAL UNIVERSITY CORPORATION HOKKAIDO UNIVERSITY; SANYO ELECTRIC CO) 4 August 2004 (2004-08-04) * page 2, paragraph 9 * * page 2, paragraph 11 * * page 3, paragraph 16 * * page 4, paragraph 34 - paragraph 35 * * figure 12 * | 9-13, 15-18 | |
| X | WO 02/087139 A (MAGNOLIA BROADBAND,INC) 31 October 2002 (2002-10-31) * page 4, line 5 - line 7 * * page 5, line 1 - line 6 * * page 5, line 18 - line 30 * * page 9, line 7 - line 8 * * page 10, line 26 - page 11, line 2 * * page 7, line 16 - line 21 * * figure 1 * * figure 4C * | 1-4,6-18 | TECHNICAL FIELDS SEARCHED (Int.Cl.7) H04L |
| A | WO 03/084092 A (QUALCOMM, INCORPORATED) 9 October 2003 (2003-10-09) * page 8, paragraph 1035 * | 1-18 | |
| A | WO 03/023996 A (MORPHICS TECHNOLOGY INC) 20 March 2003 (2003-03-20) * page 2, line 12 - line 22 * * page 2, line 29 - line 34 * * figure 1 * | 1,2,4-8, 18 | |

The present search report has been drawn up for all claims

| Place of search | Date of completion of the search | Examiner |
|---|---|---|
| The Hague | 21 October 2005 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                EP 05 01 3276

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2005

| Patent document cited in search report | | Publication date | Patent family member(s) | | Publication date |
|---|---|---|---|---|---|
| US 2004179627 | A1 | 16-09-2004 | AU 2003287297 A1 | | 13-05-2004 |
| | | | BR 0315536 A | | 30-08-2005 |
| | | | CA 2501634 A1 | | 06-05-2004 |
| | | | EP 1556985 A2 | | 27-07-2005 |
| EP 1443680 | A | 04-08-2004 | CN 1605167 A | | 06-04-2005 |
| | | | WO 03034617 A1 | | 24-04-2003 |
| | | | JP 2003124857 A | | 25-04-2003 |
| | | | US 2004246889 A1 | | 09-12-2004 |
| WO 02087139 | A | 31-10-2002 | NONE | | |
| WO 03084092 | A | 09-10-2003 | AU 2003223328 A1 | | 13-10-2003 |
| | | | CA 2480169 A1 | | 09-10-2003 |
| | | | CN 1653768 A | | 10-08-2005 |
| | | | EP 1488585 A2 | | 22-12-2004 |
| | | | JP 2005522086 T | | 21-07-2005 |
| | | | US 2003185310 A1 | | 02-10-2003 |
| WO 03023996 | A | 20-03-2003 | CN 1656709 A | | 17-08-2005 |
| | | | EP 1444794 A1 | | 11-08-2004 |
| | | | JP 2005503065 T | | 27-01-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2004012571 W

- EP 2004012571 A, PCT

### Non-patent literature cited in the description

- **B. WALKE.** Mobilfunknetze und ihre Protokolle 1. *Teubner,* 2001
- **B. WALKE.** Mobilfunknetze und ihr Protokolle 2. *Teubner,* 2001
- **P. TEJERA ; W. UTSCHICK ; G. BAUCH ; J.A. NOSSEK.** A Novel Decomposition Telchnique for International Multiuser MIMO. *ITG/IEEE Workshop on smart Antennas,* April 2005
- **G. GINIS ; J. CIOFFI.** A Multi-user Precoding Scheme achieving Crosstalk Cancellation with Application to DSL Systems. *Asilomar Conference on Signals, Systems and Computers,* October 2000, 1627-1631

- **P. TEJERA ; W. UTSCHICK ; G. BAUCH ; J.A. NOSSEK.** A Novel Decomposition Technique for Multiuser MIMO. *ITG/IEEE Workshop on Smart Antennas,* April 2005
- **G. GINIS ; J. CIOFFI.** A Multi-user Precoding Scheme achieving Crosstalk Cancellation with Application to DSL Systems. *the proceedings of the Asilomar Conference on Signals, Systems and Computers,* October 2000, 1627-1631